# EUROPEAN PATENT SPECIFICATION

(11) **EP 0 738 976 B1**
(45) Date of publication and mention of the grant of the patent: **23.01.2002**
(21) Application number: 95116569.5
(22) Date of filing: 20.10.1995
(51) Int. Cl.: G06F 11/32

(54) **Display of detected event for information handling system**
Anzeige nachgewiesenen Ereignisses für Informationbearbeitungssystem
Affichage d'événement pour système de manipulation d'information

(30) Priority: 19.04.1995 JP 11798395; 20.04.1995 JP 11917295
(43) Date of publication of application: 23.10.1996
(73) Proprietor: FUJI XEROX CO., LTD., Minato-ku Tokyo 107 (JP)
(72) Inventor: Sasagawa, Shigekazu, c/o Fuji Xerox Co., Ltd., Takatsu-ku, Kawasaki-shi, Kanagawa (JP)
(74) Representative: Grünecker, Kinkeldey, Stockmair & Schwanhäusser Anwaltssozietät

(56) References cited:
- EP-A- 0 295 379
- IBM TECHNICAL DISCLOSURE BULLETIN, vol. 37, no. 4B, April 1994, NEW YORK US, pages 423-425, XP002009583 "Graphical user interface for LAN NetView Fix - event log filter notebook"
- IBM TECHNICAL DISCLOSURE BULLETIN, vol. 37, no. 4B, 1 April 1994, page 7/8 XP000451151 "METHOD TO ALLOW LAN NETVIEW FIX USERS TO IDENTIFY IMPORTANT EVENTS"

## Description

The present invention generally relates to an information processing apparatus. More specifically, the present invention is directed to an event monitoring display capable of not only displaying an event, but also selecting such an event desirably being displayed by a user.

In a system that monitors a plurality of computer systems by way of a single console, failure messages previously registered in the console are compared with various messages transmitted from the respective computer systems. When the failure message is made coincident with the transmitted message, it is judged that the failure has occurred, which will then be displayed on the multi-window screen of the console. However, this conventional information processing system could not realize that a user selects his desirable event and the desirable event is displayed in an easily understandable manner.

EP 0 295 379 A2 describes network control stations and systems in which problem condition alert signals and messages are defined and sent from operating entities in the network to the network system operator console at the network management control program host. Certain message units or specific alerts may be filtered, i.e. selected for exclusion or for different treatment at the alert receiving station, respectively at the network control console operator's display. Thus, while ordinarily each alert is locked and presented to the operator as it arrives, filters may be set to specify that a particular alert should be locked only for later retrieval but not displayed for the operator immediately or perhaps not even locked.

IBM Technical Disclosure Bulletin, Vol. 37, No. 4B, April 1994, New York, US, Pages 423 to 425, "Graphical User Interface for LAN NetView Fix - Event Log Filter Notebook" addresses a graphical user interface that will display a Presentation Manager™ notebook that contains pages that a user can use to define event log filters. The event log filters are used to determine which entries should be retrieved from an event log database and displayed. Only those events in the event log database that match the specified filter criteria will be retrieved and displayed.

The present invention has the object to provide an information processing apparatus for an improved detecting and displaying of interesting events.

The foregoing object is solved by the subject-matter of independent claim 1.

Preferred embodiments are the subject-matters of the dependent claims.

According to an aspect of the present invention, there is provided an information processing apparatus including a plurality of resources containing a display apparatus and for detecting an event occurred in the resources to display the detected event on the display apparatus, comprising:
detecting means provided with the resources, for detecting an event occurred in the resources;
detected event information storing means for storing therein information related to the detected event;
detected event display controlling means for displaying the detected event on the display apparatus based on the information stored in said detected event information storing means;
interest event information storing means for storing therein information related to an interest event;
judging means for judging as to whether or not the detected event corresponds to the interest event based on the information stored in said interest event information storing means; and
said detected event display controlling means displays an event which is judged to be coincident with the interest event by said judging means in a window in front of the window of an event which is judged not to be coincident with the interest event by said judging means.

Fig. 1 is a schematic block diagram showing a basic structure of an information processing apparatus according to an embodiment of the present invention;
Fig. 2 is a schematic block diagram showing a detailed arrangement of the information processing apparatus according to the embodiment of the present invention;
Fig. 3 is a view showing a format of event data used in the information processing apparatus of Fig. 2;
Fig. 4 is a view showing a display example of the normal events employed in the embodiment of Fig. 2;
Fig. 5 is a view showing a format of interest event data employed in the embodiment of Fig. 2;
Fig. 6 is a view showing a concrete example of the interest event data shown in Fig. 5;
Fig. 7 is a view explanatorily showing a selection of the interest event based on the event subjects used in the embodiment of Fig. 2;
Fig. 8 is a view explanatorily showing a notification of the interest events used in the embodiment of Fig. 2;
Fig. 9 is a view explanatorily showing a display of the selected interest event used in the embodiment of Fig. 2;
Fig. 10 is a schematic block diagram showing an illustrative arrangement of a message forming system;
Fig. 11 is a view showing a format of message data stored in a message database file employed in the message forming system of Fig. 10;
Fig. 12 is a view schematically showing a concrete example of the message data of Fig. 11; and
Fig. 13 is a flow chart for explaining operations of the message forming system shown in Fig. 10.

Referring now to the accompanying drawings, an embodiment of the present invention will be described.

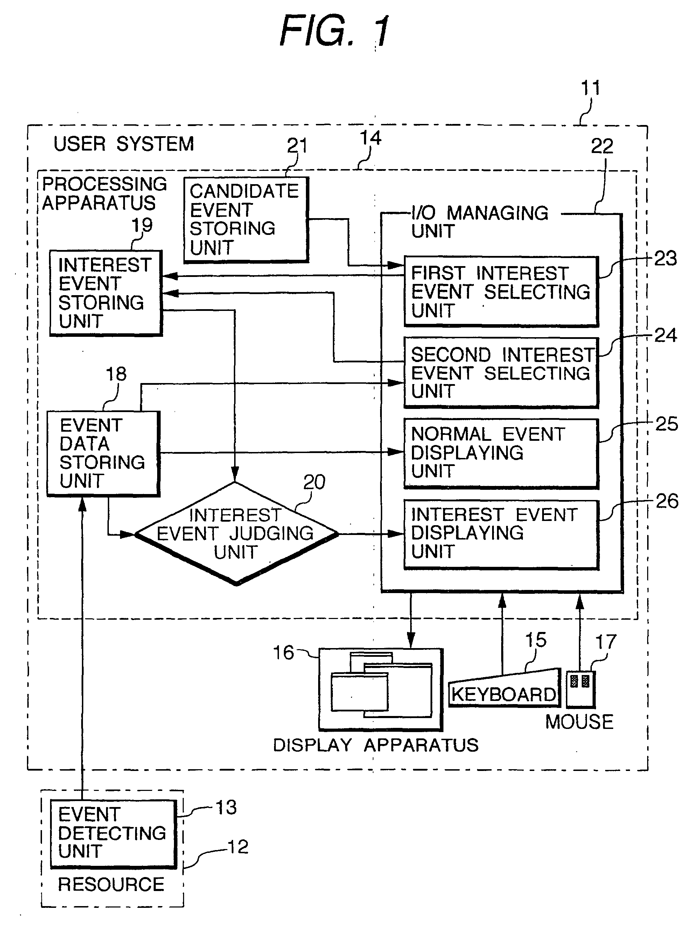

Fig. 1 simply illustrates an information processing system according to an embodiment of the present invention. In this drawing, a user system 11 is connected to a plurality of resources 12. The user system 11 may be connected via a network such as a local area network (LAN) to the resources 12, or may be directly connected via a specific cable to the resources 12. Each of the resources 12 may be realized by such a hardware as a computer system, a printer, and a scanner, or may be realized by a software executed on a hardware. The resource 12 owns an event detecting unit 13 for detecting an event occurred in the resource 12. When an event occurs, event data is sent from the event detecting unit 13 to the user system 11.

The user system 11 corresponds to, for example, either a personal computer, or a workstation, and is constructed of a processing apparatus 14, a keyboard 15, a display apparatus 16, a mouse 17 and so on. The processing apparatus 14 performs various processes and also an event monitoring/displaying process. For the sake of convenience, the processing apparatus 14 may be equivalent to an event monitoring/displaying unit. The event monitoring/displaying unit which may be realized by the processing apparatus 14 in the software execution mode includes an event data storing unit 18, an interest event data storing unit 19, an interest event judging unit 20, a candidate event data storing unit 21, and an input/output (I/O) managing unit 22. The input/output managing unit 22 includes a first interest event selecting unit 23, a second interest event selecting unit 24, a normal event displaying unit 25, and an interest event displaying unit 26.

The event detecting unit 13 employed in the resource 12 of the information processing system according to the embodiment detects the event occurred in the resource, and transfers the event data to the user system 11. In the user system 11, the event data storing unit 18 stores the event data, and the normal event displaying unit 25 displays the event data within a predetermined window of the display apparatus 16.

In the candidate event data storing unit 21, information on such an event which may probably occur in the resource 12 is stored. The first interest event selecting unit 23 displays to the user the candidate event (proposed event) defined by the data stored in the candidate event data storing unit 21, by which the user can select the event. The data related to the event selected by the user is stored in the interest event data storing unit 19. In the second interest event selecting unit 24, the user can select a predetermined event from the events displayed on the display apparatus 16 by the normal event displaying unit 25. Also the data related to the event selected at this time is stored in the interest event data storing unit 19.

The interest event judging unit 20 compares the event data notified from the event detecting unit 13 with the event data of the interest event data storing unit 19, and notifies the coincident information to the interest event displaying unit 26. The interest event displaying unit 26 displays this notified event in a window in front of the window for the above-described normal event of the display apparatus 16.

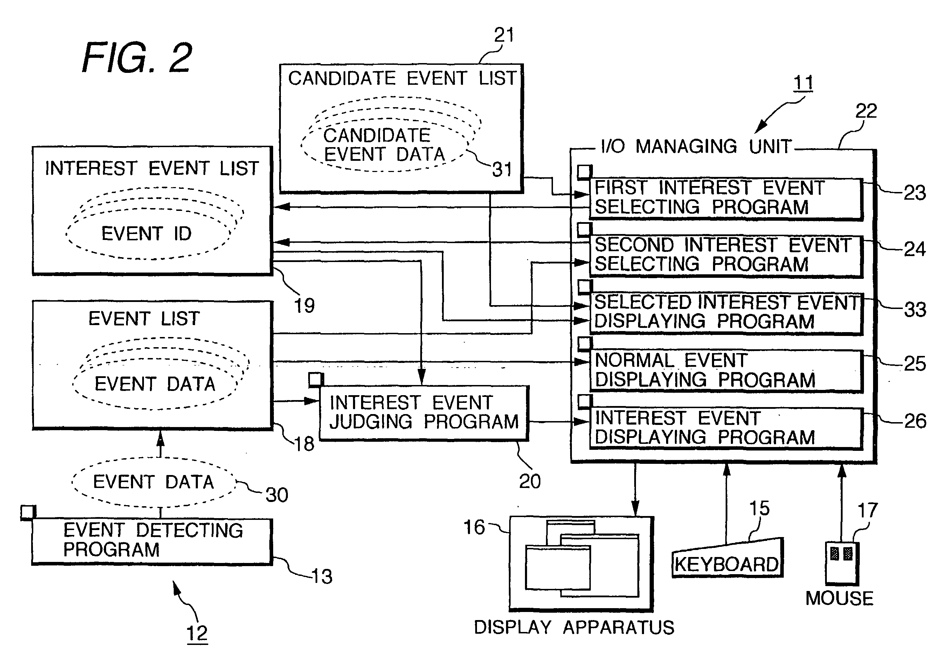

Fig. 2 schematically represents a concrete example of the above-described information processing system according to the embodiment. In Fig. 2, the same reference numerals shown in Fig. 1 are employed as those for denoting the same or similar elements, and detailed descriptions thereof are omitted. In Fig. 2, an event detecting program 13 of the resource 12 detects an event occurred in the resource 12, stores event data 30 into an event list 18, and transfers the stored event data to an interest event judging program 20 and a normal event displaying program 25.

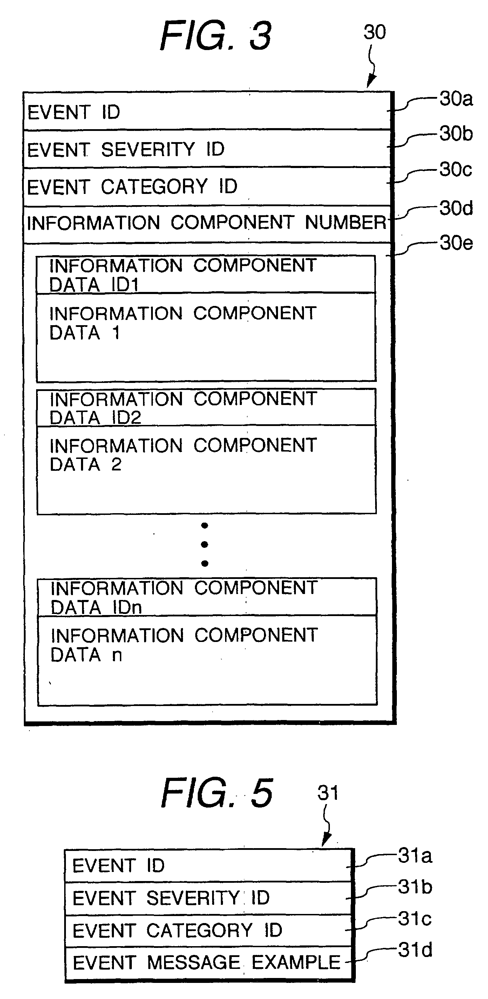

As indicated in Fig. 3, the event data 30 contains an event ID 30a functioning as an identifier for exclusively indicating a sort of notified information, an event severity ID 30b functioning as an identifier indicative of a severity of notified information, and an event category ID 30c functioning as an identifier representative of which information the notified information is related to. As an event, a description will now be made of, e.g., a failure. That is, actual failure information is constructed of a plurality of pieces of dynamic component information for indicating such items, for instance, in which apparatus a failure occurred, which sort of failure occurred, and when a failure occurred. In this embodiment, both of an information component data list 30e and information component number data 30d indicative of the number of components contained in this information component data list 30e are contained in the event data 30. The information component data list 30e is constituted by a pair of information component data ID functioning as an identifier for representing these components, and information component data corresponding to the actual dynamic component data.

When a predetermined service is requested to the resource 12, for instance, but a supply of this service is stopped on the side of the resource 12, such an event message as "Supply of service A is stopped due to reason B" is notified to the user system 11. In this case, assuming now that "A" and "B" are variables, such an event message as "Supply of service A is stopped due to reason B" indicates a sort of event that a predetermined service supply is stopped due to a certain reason. This implies that the event may occur in any place, any type of service may be provided, and any reason may be accepted. This sort of event is specified by the event ID 30a. Then, the component ID corresponds to "service" and "reason", and the component data corresponds to the concrete values of A and B. Based upon such information, a concrete message "Supply of service A is stopped due to reason B" is produced.

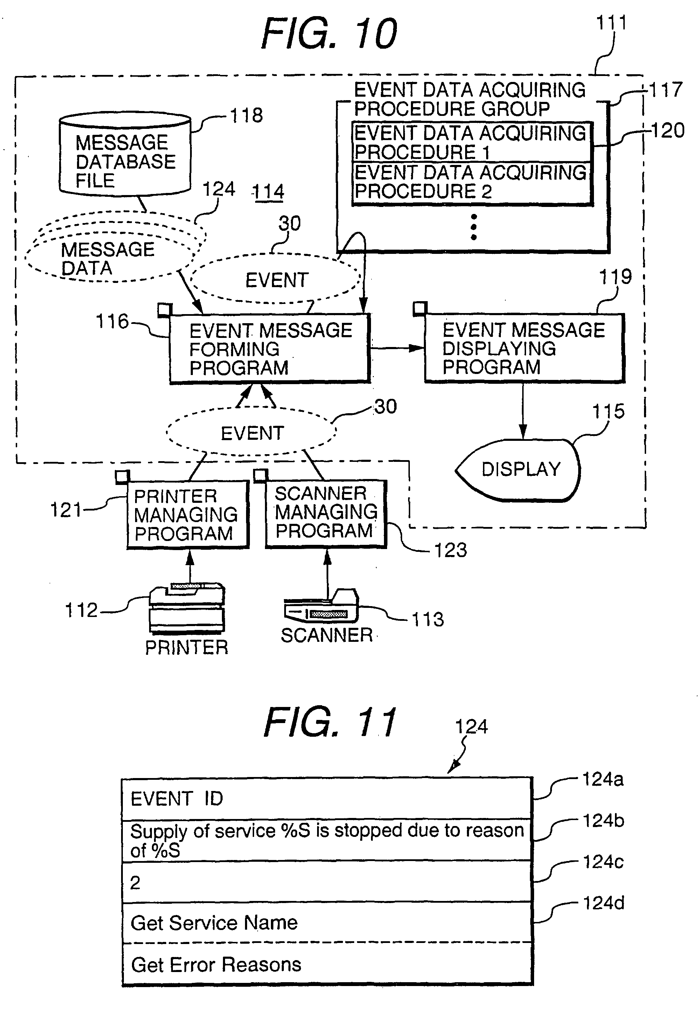

A detailed description how to produce a message will be made later with reference to the drawings subsequent to Fig. 10.

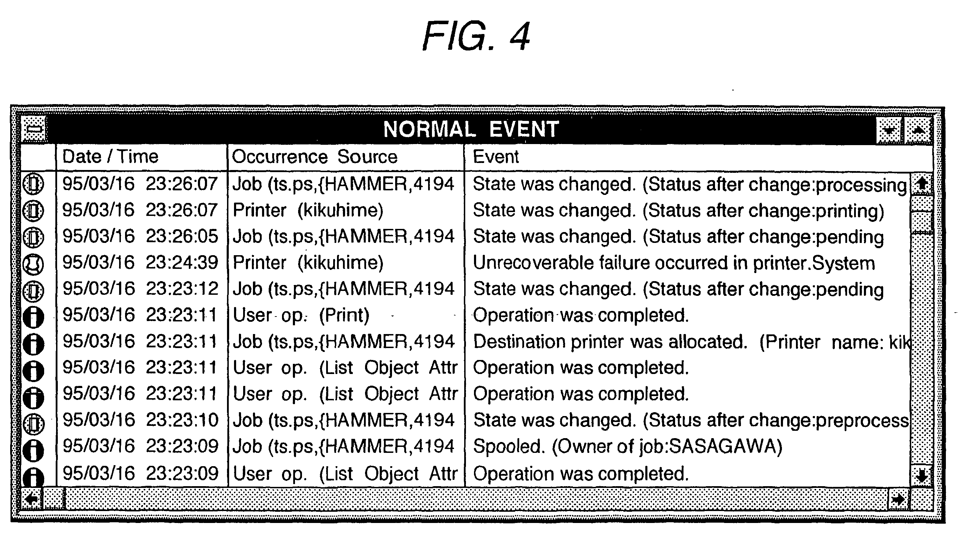

The normal event displaying program 25 displays the event notified from the event detecting program 13 in a list form in a normal event displaying window of the display apparatus 16 by using the event data. An example of this display is shown in Fig. 4. It should be noted that the normal event displaying program 25 causes all of the notified events to be displayed in response to the display mode, or causes only the event selected in accordance with a preset condition to be displayed.

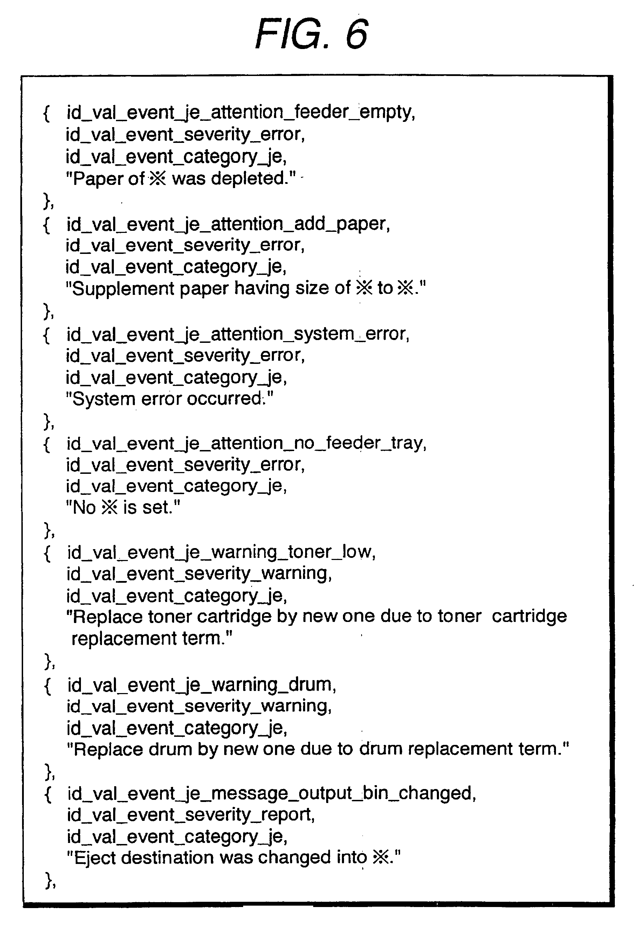

The candidate event list 21 stores therein all of candidate events (proposed events) as a list of the candidate event data 31, which may be produced in the information processing system according to the embodiment. As indicated in Fig. 5, the candidate event data 31 contains an event ID 31a functioning as an identifier for exclusively indicating a sort of notified information, an event severity ID 31b functioning as an identifier indicative of a severity of notified information, an event category ID 31c functioning as an identifier representative of which information the notified information is related to, and a display event message example 31d corresponding to the event ID 31a. The event message example is, for instance, such a message "Supply of service A is stopped due to reason B". It should be noted that symbols A and B correspond to variables. In Fig. 6, there is shown an example of the candidate event list 21. In this example, seven sorts of candidate events (proposed events) are indicated.

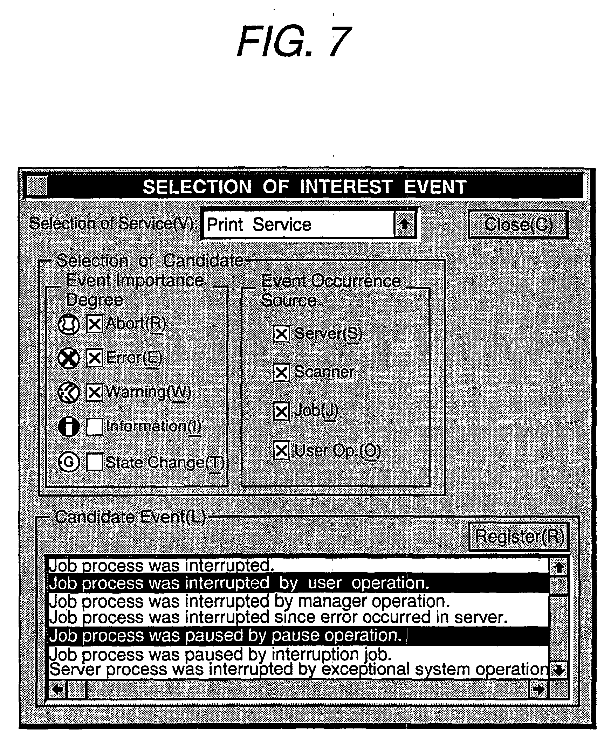

The first interest event selecting program 23 of the input/output managing unit 22 is executed in response to an operation instruction issued from a user who manipulates either the keyboard 15 or the mouse 17, and thus, the candidate events contained in the candidate event list 21 are displayed in a list form within the window of the display apparatus 16. The user selects and instructs a desired interest event as an interest event from the candidate events displayed in the list by using the mouse 17 or the keyboard 15. When this list is displayed, for example, as shown in Fig. 7, either the severity or the category of the candidate event is selected, so that only the candidate events belonging to the same severity or the same category may be indicated. Alternatively, all of the candidate events may be displayed. In the example of Fig. 7, "abort", "error" and "warning" are selected from the severity, and all of "server", "scanner", "job" and "user operation" are selected as an event occurrence source. This selection may be performed by a click process of the corresponding button with employment of the mouse 17. In accordance with this click process, a mark "x" is displayed within the button. The message samples of the candidate event are displayed every line within the window of Fig. 7. The relevant line is click-processed by way of the mouse 17 to select the corresponding candidate event. Thereafter, when the register button is click-processed, the register operation is ended. Thus, when the candidate event is registered, the candidate event ID of the candidate event is stored in the interest event list 19. In this manner, sorts of desirable events are registered.

In response to an operation instruction issued from the user by using the keyboard 15 or the mouse 17, the second interest event selecting program 24 is executed. The user selects and instructs such an event to be displayed as an interest event from the events displayed in the list form in the normal event display window of the display apparatus 16 in accordance with the normal event displaying program 25. Under control of the second event selecting program 24, the event ID of the event selected with reference to the event list 18 is stored in the interest event list 19. Into the interest event list 19, the event IDs of the events which have been selected in this manner by utilizing the first interest event selecting program 23 and the second interest event selecting program 24 are stored as a list. It should be understood that since the registered item is the event ID, the concrete events under display are not registered, but the sort of a preselected event containing such a concrete event is registered. As a consequence, such an event similar to the concrete event under display is also handled as the interest event.

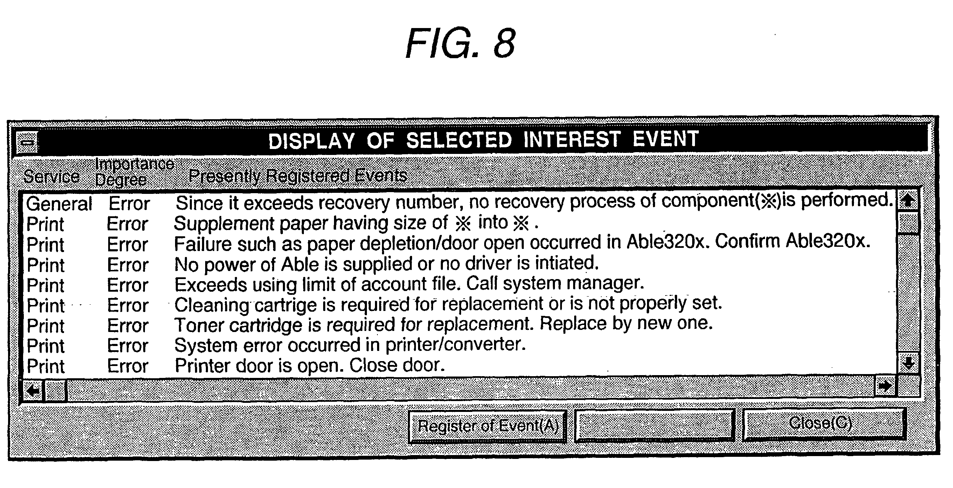

The selected interest event displaying program 33 is executed in response to an operation instruction issued from the user by employing the keyboard 15 or the mouse 17. Under control of the displaying program 33, all of the events ID 32 registered in the interest event list 19 are compared with the event ID 31a of the candidate event data 31 stored in the candidate event list 21, and the candidate event coincident therewith is displayed in a list with employment of the event data 31 of the candidate event list. This display example is indicated in Fig. 8.

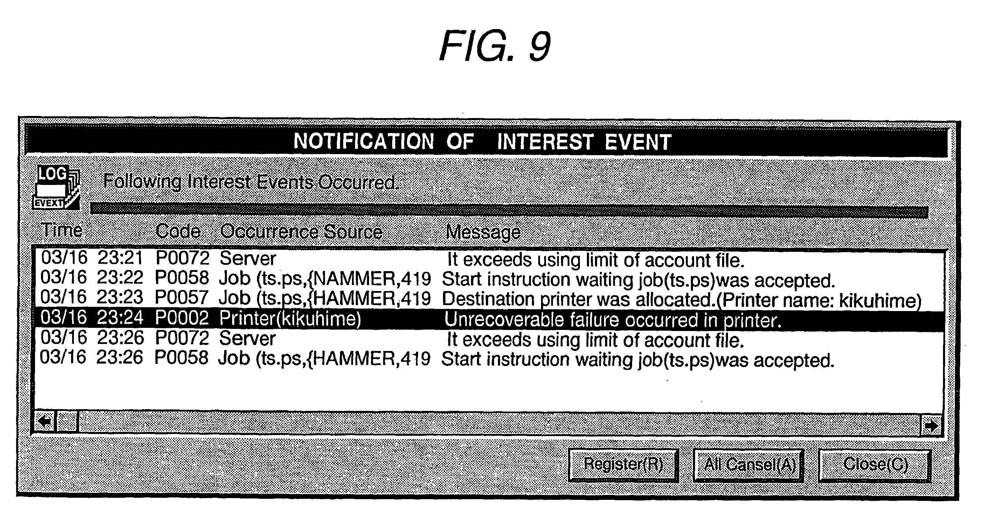

The interest event judging program 20 sequentially compares the event ID of the event notified from the event detecting program 13 with all of the events ID stored in the interest event list 19, and notifies the coincident event ID to the interest event displaying program 26 when the coincidence is established. The interest event displaying program 26 produces another window for displaying an interest event, different from the window produced by the normal event displaying program 25, and displays the event notified from the interest event judging program 20. This interest event displaying window is arranged at the frontmost screen in order that the user can easily recognize the occurrence of the interest event. It should also be noted that when the interest event judging program 20 notifies another interest event while displaying one interest event, the former interest event is displayed in a list form on the same interest event displaying window, so as to avoid a cumbersome window display by forming a new window. Such a list example is indicated in Fig. 9.

It should also be noted that although the interest events have been registered with respect to the sorts of events in the above-explained embodiment, the interest events may be registered with respect to the contents of the concrete events.

Next, a message production will be explained.

Fig. 10 schematically shows an information processing apparatus containing a message producing mechanism. In this drawing, a user system 111 (corresponding to reference numeral 11 of Fig. 1) is connected via either a network such as a LAN, or an individual cable to resources such as a printer 112 and a scanner 113. The user system 111 is, for instance, a personal computer or a workstation, and contains various input/output apparatuses such as a processing apparatus 114 and a display apparatus 115. In the user system 111, an event message forming/displaying unit realized in a software execution includes an event message forming program 116, an event data acquiring procedure group 117, a message database file 118, and an event message displaying program 119, as represented in the respective blocks. The event data acquiring procedure group 117 is constructed of a plurality of event data acquiring procedures 120.

The printer 112 contains a printer managing program 121. This printer managing program 121 detects such an event as a failure occurred in the printer 112, and the detected event is notified to the user system 111 by employing the event data 30. The event data 30 has been already described with reference to Fig. 3. Similarly, the scanner 113 owns a scanner managing program 123. This scanner managing program 123 detects an event of the scanner 113, and notifies the detected event to the user system 111 with using the event data 30. Other resources own similar event detecting/notifying functions. It should be noted that the resources may be realized by a hardware, or a software.

The message database file 118 holds message data 124, depending on the sort of event. As shown in Fig. 11, the message data 124 contains an event ID 124a functioning as an identifier for indicating the sort of event, a basic message character string 124b, a list 124d of procedures for fetching a message component from the event data 30, and an indication 124c for the number of procedure designated by the list 124d. The basic message character string 124b corresponds to a static message component common to the relevant sort of event, and a variable "%S" is positioned at portions different from each other in the respective events. When a dynamic message component different from each other in the respective events is inserted into the variable portions, a complete message may be produced.

In the example shown in Fig. 11, the message data 124 is indicated which relates to the sort of event, i.e., "Supply of a certain service is stopped due to some reason in any of resources". Then, the basic message character sting such as "Supply of service %S is stopped due to reason of %S" contains the two variables. Two message components are inserted into the variable portions. The message components are derived from the event data by an event data acquiring procedure specified by identifiers "GetServiceName" and "GetErrorReason".

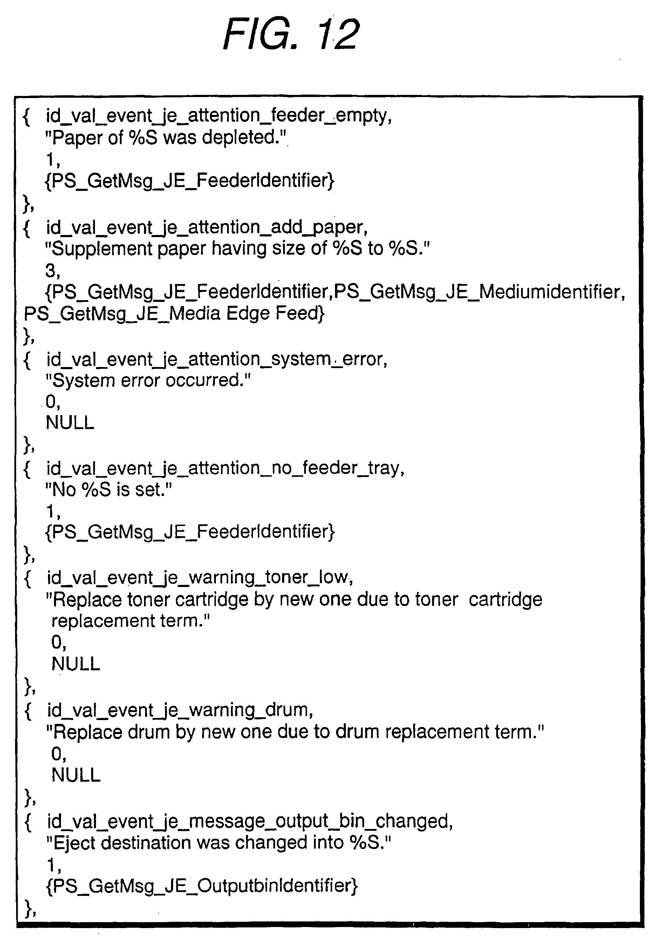

Fig. 12 shows a more concrete example of the message data 124. In Fig. 12, there is indicated seven sorts of message data 124, and the first message data corresponds to such an event when printer paper was depleted in the printer. The event ID 124a corresponds to an alphabetical character string starting with "id". The basic message characteristic string 124b implies "Paper of %S was depleted". The procedure number display 124c is "1", and the event data acquiring procedure list 124d for fetching the message component from the event data 30 is indicated by an alphabet character string starting with "PS". Other message data examples are similarly described, and therefore no explanations thereof are made again.

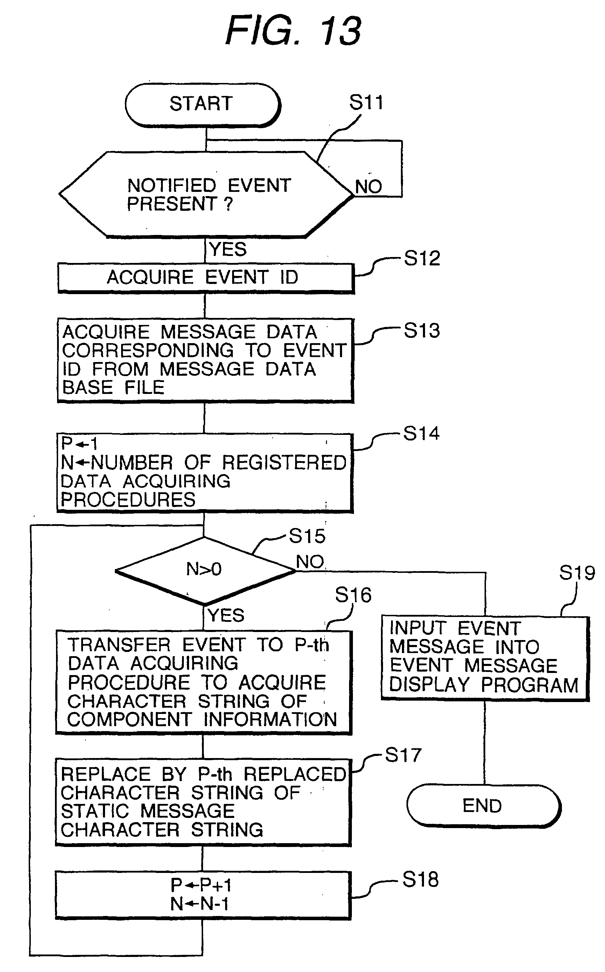

Fig. 13 indicates a process to form a message. In this drawing, the event message forming program 116 judges whether or not the event from the resource such as the printer 112 is notified by the event data 30 (step S11). Upon receipt of the event data 30, the event message forming program 116 retrieves the message database file 118 by using the event ID 124a to derive the corresponding message data 124 (steps S12 and S13). Subsequently, the event message forming program 116 initializes the sequence "P" of the position into which the information component (dynamic message component) is inserted (namely sequence of event data acquiring procedures in the message data 124) to 1, and the number "N" of unexecuted event data acquiring procedures (number of uninserted dynamic message components) is initialized by the procedure number display 124c of the message data 124 (step S14).

Thereafter, a check is done as to whether or not there is an unexecuted event data acquiring procedure 120 (namely whether or not an uninserted dynamic message component is present). If YES, then the event data 30 is transferred to the P-th event data acquiring procedure 120 registered in the message data 124, so that a character string of a message component corresponding to this event data acquiring procedure 120 is derived (steps S15 and S16). The event message forming program 116 substitutes the derived character string for the p-th variable of the basic message character string 124b (step S17). Thereafter, P is incremented by 1 and N is decremented by 1 (step S18). Subsequently, a similar process operation is repeated until N becomes zero. When N becomes zero, the complete message is supplied to the event message displaying program 119, and the message is displayed on the display apparatus 115 under control of the event message displaying program 119.

The event message forming method of this information processing apparatus can be applied to the formation of new sorts of event messages by adding the message data 124. In response to the new sorts of events, the managing program employed in the resource produces the corresponding event data 30. On the other hand, the message data 124 corresponding to the new sorts of events is additionally provided in the message database file 118. If a new event data acquiring procedure 120 is further, newly required, then such a new event data acquiring procedure may be prepared. In such a structure, the new sorts of messages can be accepted without changing the basic idea of message forming/displaying method.

As previously explained, according to the present invention, the event desired to be truly monitored by the user can be designated, so that operability of the information processing system can be improved. As to the candidate event selection based on the list, such a scheme selection can be systematically achieved. In this case, the class of the candidate event can be especially designated. Also, in the selection based on the list of the detected event, such a selection properly adapted to the actual environment can be made, so that an important event which has been mistakenly checked in the list of candidate events can be covered.

Based on the identifier indicative of the event sort contained in the event data, the corresponding basic data is derived from the storing unit, and further the information specific to the event is derived, and then this specific information is inserted into the basic message to thereby form a complete message. As a consequence, the basic messages can be commonly used in the most messages. Also, the procedure to derive the information specific to the event can be commonly used in the most messages. Accordingly, the messages can be formed by a simply constructed arrangement. A newly formed event may be processed with higher flexibility by adding a basic message and the like.

## Claims

1. An information processing apparatus including a plurality of resources (12) containing a display apparatus (16) and for detecting an event occurred in the resources (12) to display a detected event on the display apparatus (16), comprising:
detecting means (13), provided with the resources (12), for detecting an event occurred in the resources (12);
detected event information storing means (18) for storing therein information related to the detected event;
detected event display controlling means (26) for displaying the detected event on the display apparatus (16) based on the information stored in said detected event information storing means (18);
interest event information storing means (19) for storing therein information related to an interest event;
judging means (20) for judging as to whether or not the detected event corresponds to the interest event based on the information stored in said interest event information storing means; and
said detected event display controlling means (26) displays an event which is judged to be coincident with the interest event by said judging means (20) in a window in front of the window of an event which is judged not to be coincident with the interest event by said judging means (20).

2. The information processing apparatus as claimed in claim 1, further comprising:
candidate event information storing means (21) for storing therein information related to a candidate event which may occur in the resources (12);
candidate event display controlling means (25) for displaying the candidate event on the display apparatus (16); and
candidate event selecting means for selecting the candidate event displayed by said candidate event display controlling means (25), wherein the interest event information storing means (19) stores the candidate event selected by said candidate event selecting means as an interest event.

3. The information processing apparatus as claimed in claim 2, wherein said detected event display controlling means (26) and said candidate event display controlling means (25) display events on separate windows respectively.

4. The information processing apparatus as claimed in claim 2 wherein said candidate event display controlling means (25) includes means for designating a class of the candidate event, said designating means causing only the candidate event belonging to a predetermined class to be displayed.

5. The information processing apparatus as claimed in claim 2 wherein said candidate event selecting means selects candidate events with respect to event types (30c, 31c).

6. The information processing apparatus as claimed in claim 1, further comprising:
detected event selecting means for selecting the detected event displayed by said detected event display controlling means (26), wherein interest event information storing means (19) stores a detected event selected by said detected event selecting means as interest event.

7. The information processing apparatus as claimed in claim 6, wherein said detected event and said interest event are displayed on separate windows.

8. The information processing apparatus as claimed in claim 6, wherein said detected event selecting means selects interest events with respect to event types (30c, 31c).

## Patentansprüche

1. Informationsverarbeitungsvorrichtung, umfassend eine Mehrzahl von Ressourcen (12), enhaltend eine Anzeigevorrichtung (16) und zum Erfassen eines Ereignisses, aufgetreten in den Ressourcen (12), um ein erfasstes Ereignis auf der Anzeigevorrichtung (16) anzuzeigen, die aufweist:
eine Erfassungseinrichtung (13), versehen mit den Ressourcen (12), zum Erfassen eines Ereignisses, das in den Ressourcen (12) auftrat;
eine Informations-Speichereinrichtung (18) für erfasste Ereignisse zum Speichern darin von Informationen, die sich auf das erfasste Ereignis beziehen;
eine Anzeige-Steuereinrichtung (26) für erfasste Ereignisse zum Anzeigen des erfassten Ereignisses auf der Anzeigevorrichtung (16) basierend auf den Informationen, die in der Informations-Speichereinrichtung (18) für die erfassten Ereignisse gespeichert sind;
eine Informations-Speichereinrichtung (19) für interessante Ereignisse zum Speichern darin von Informationen, die sich auf ein interessantes Ereignis beziehen;
eine Beurteilungseinrichtung (20) zum Beurteilen, ob das erfasste Ereignis dem interessanten Ereignis entspricht oder nicht, basierend auf den Informationen, die in der Informations-Speichereinrichtung für das interessante Ereignis gespeichert sind; und
wobei die Anzeige-Steuereinrichtung (26) für das erfasste Ereignis ein Ereignis anzeigt, das dahingehend beurteilt wird, daß es mit dem interessanten Ereignis übereinstimmt, und
zwar durch die Beurteilungseinrichtung (20) in einem Fenster vor dem Fenster eines Ereignisses, das dahingehend beurteilt wird, daß es mit dem interessanten Ereignis nicht übereinstimmt, und zwar durch die Beurteilungseinrichtung (20).

2. Informationsverarbeitungsvorrichtung nach Anspruch 1, die weiterhin aufweist: eine Informations-Speichereinrichtung (21) für Kandidaten-Ereignisse zum Speichern darin von Informationen, die sich auf ein Kandidaten-Ereignis beziehen, das in den Ressourcen (12) auftreten kann;
eine Anzeige-Steuereinrichtung (25) für Kandidaten-Ereignisse zum Anzeigen des Kandidaten-Ereignisses auf der Anzeigevorrichtung (16); und
eine Auswahleinrichtung für Kandidaten-Ereignisse zum Auswählen des Kandidaten-Ereignisses, angezeigt durch die Anzeige-Steuereinrichtung 25 für Kandidaten-Ereignisse, wobei die Informations-Speichereinrichtung (19) für interessante Ereignisse das Kandidaten-Ereignis speichert, das durch die Auswahleinrichtung für Kandidaten-Ereignisse als ein interessantes Ereignis ausgewählt ist.

3. Informationsverarbeitungsvorrichtung nach Anspruch 2, wobei die Anzeige-Steuereinrichtung (26) für erfasste Ereignisse und die Anzeige-Steuereinrichtung (25) für die Kandidaten-Ereignisse Ereignisse auf separaten Fenstern jeweils anzeigen.

4. Informationsverarbeitungsvorrichtung nach Anspruch 2, wobei die Anzeige-Steuereinrichtung (25) für Kandidaten-Ereignisse eine Einrichtung zum Bezeichnen einer Klasse des Kandidaten-Ereignisses umfasst, wobei die Bezeichnungseinrichtung bewirkt, dass nur das Kandidaten-Ereignis, das zu einer vorbestimmten Klasse gehört, angezeigt wird.

5. Informationsverarbeitungsvorrichtung nach Anspruch 2, wobei die Auswahleinrichtung für Kandidaten-Ereignisse Kandidaten-Ereignisse in Bezug auf Ereignis-Typen (30c, 31c) auswählt.

6. Informationsverarbeitungsvorrichtung nach Anspruch 1, die weiterhin aufweist:
eine Auswahleinrichtung für erfasste Ereignisse zum Auswählen des erfassten Ereignisses, angezeigt durch die Anzeige-Steuereinrichtung (26) für erfasste Ereignisse, wobei die Informations-Speichereinrichtung (19) für interessante Ereignisse ein erfasstes Ereignis, ausgewählt durch die Auswahl-Einrichtung für erfasste Ereignisse, als ein interessantes Ereignis speichert.

7. Informationsverarbeitungsvorrichtung nach Anspruch 6, wobei das erfasste Ereignis und das interessante Ereignis auf separaten Fenstern angezeigt werden.

8. Informationsverarbeitungsvorrichtung nach Anspruch 6, wobei die Auswahl-Einrichtung für erfasste Ereignisse interessante Ereignisse in Bezug auf Ereignis-Typen (30c, 31c) auswählt.

## Revendications

1. Appareil de traitement d'information incluant une pluralité de ressources (12) contenant un appareil d'affichage (16) et pour détecter un événement qui survient dans les ressources (12) afin d'afficher un événement détecté sur l'appareil d'affichage (16), comprenant :
un moyen de détection (13), prévu avec les ressources (12), pour détecter un événement qui survient dans les ressources (12) ;
un moyen de stockage d'information d'événement détecté (18) pour stocker dedans une information rapportée à l'événement détecté ;
un moyen de commande d'affichage d'événement détecté (26) pour afficher l'événement détecté sur l'appareil d'affichage (16) sur la base de l'information qui est stockée dans ledit moyen de stockage d'information d'événement détecté (18) ;
un moyen de stockage d'information d'événement digne d'intérêt (19) pour stocker dedans une information rapportée à un événement digne d'intérêt ;
un moyen d'appréciation (20) pour apprécier si oui ou non l'événement détecté correspond à l'événement digne d'intérêt sur la base de l'information qui est stockée dans ledit moyen de stockage d'information d'événement digne d'intérêt ; et
ledit moyen de commande d'affichage d'événement détecté (26) affiche un événement qui est apprécié comme coïncidant avec l'événement digne d'intérêt par ledit moyen d'appréciation (20) dans une fenêtre à l'avant de la fenêtre d'un événement qui est apprécié comme ne coïncidant pas avec l'événement digne d'intérêt par ledit moyen d'appréciation (20).

2. Appareil de traitement d'information selon la revendication 1, comprenant en outre :
un moyen de stockage d'information d'événement de candidat (21) pour stocker dedans une information rapportée à un événement de candidat qui peut survenir dans les ressources (12) ;
un moyen de commande d'affichage d'événement de candidat (25) pour afficher l'événement de candidat sur l'appareil d'affichage (16) ; et
un moyen de sélection d'événement de candidat pour sélectionner l'événement de candidat qui est affiché par ledit moyen de commande d'affichage d'événement de candidat (25), où le moyen de stockage d'information d'événement digne d'intérêt (19) stocke l'événement de candidat qui est sélectionné par ledit moyen de sélection d'événement de candidat en tant qu'événement digne d'intérêt.

3. Appareil de traitement d'information selon la revendication 2, dans lequel ledit moyen de commande d'affichage d'événement détecté (26) et ledit moyen de commande d'affichage d'événement de candidat (25) affichent respectivement des événements sur des fenêtres séparées.

4. Appareil de traitement d'information selon la revendication 2, dans lequel ledit moyen de commande d'affichage d'événement de candidat (25) inclut un moyen pour désigner une classe de l'événement de candidat, ledit moyen de désignation provoquant l'affichage de seulement l'événement de candidat qui appartient à une classe prédéterminée.

5. Appareil de traitement d'information selon la revendication 2, dans lequel ledit moyen de sélection d'événement de candidat sélectionne des événements de candidat en relation avec des types d'événement (30c, 31c).

6. Appareil de traitement d'information selon la revendication 1, comprenant en outre :
un moyen de sélection d'événement détecté pour sélectionner l'événement détecté qui est affiché par ledit moyen de commande d'affichage d'événement détecté (26), où un moyen de stockage d'information d'événement digne d'intérêt (19) stocke un événement détecté qui est sélectionné par ledit moyen de sélection d'événement détecté en tant qu'événement digne d'intérêt.

7. Appareil de traitement d'information selon la revendication 6, dans lequel ledit événement détecté et ledit événement digne d'intérêt sont affichés sur des fenêtres séparées.

8. Appareil de traitement d'information selon la revendication 6, dans lequel ledit moyen de sélection d'événement détecté sélectionne des événements dignes d'intérêt en relation avec des types d'événement (30c, 31c).
